# DEMANDE DE BREVET EUROPEEN

(11) **EP 0 915 139 A1**
(43) Date de publication de la demande: **12.05.1999**
(21) Numéro de dépôt: 98402740.9
(22) Date de dépôt: 03.11.1998
(51) Int. Cl.: C09D 17/00, D21H 19/82

(54) **Matériaux bitumineux teintés, procédé d'obtention et composition colorante pour la mise en oeuvre du procédé**

(30) Priorité: 07.11.1997 FR 9714063
(71) Demandeur: Onduline, 75818 Paris Cédex 17 (FR)
(72) Inventeur: Bouchez, Alain, 94300 Vincennes (FR); Capitaine, Dominique, 27790 Rosay sur Lieure (FR)
(74) Mandataire: Michelet, Alain

(57) **Abrégé**

L'invention consiste en un procédé d'obtention de matériaux bitumineux teintés consistant à :
- appliquer sur au moins une face du matériau à traiter une composition colorante aqueuse à base de pigments et de résine dont le domaine de solubilité est restreint,
- sécher le matériau revêtu de la composition colorante,
- puis l'imprégner de bitume.

## Description

L'invention est relative aux matériaux bitumineux colorés ou pigmentés, servant notamment de matériaux de couverture, de bardage ou d'étanchéité.

Un procédé pour la coloration ou la pigmentation de matériaux bitumineux a été déjà décrit dans le brevet français n°2 352 929.

Il consiste à appliquer une composition de coloration sur un matériau fibreux, puis à sécher la composition et à imprégner le matériau fibreux ainsi revêtu dans un bain de bitume chaud.

La composition de coloration présente une forte teneur en eau et comporte de la résine, des pigments, un agent épaississant, un agent dispersant et éventuellement des charges.

Ce procédé permet d'obtenir des matériaux bitumineux teintés dont la tenue au vieillissement est meilleure que celles constatées sur les matériaux obtenus par des procédés connus.

Il est cependant apparu nécessaire d'améliorer encore la tenue au vieillissement des matériaux bitumineux teintés pour éviter leur dégradation, même dans des conditions climatiques extrêmes.

L'invention concerne tout d'abord une nouvelle composition à base de résine et de pigments, pour l'obtention de matériaux bitumineux teintés.

La résine utilisée présente la particularité d'avoir un domaine de solubilité restreint.

La composition de coloration est préparée en réalisant les étapes successives suivantes :

La résine est tout d'abord solubilisée dans l'eau et à l'intérieur de son domaine de solubilité. Les pourcentages en poids de la résine et de l'eau dans le mélange obtenu sont environ entre 30 et 70 % de résine et 30 et 70 % d'eau. Le mélange obtenu est limpide.

On ajoute ensuite au mélange un additif qui permettra d'obtenir une dispersion stable. La quantité de l'additif est comprise entre 0,1 et 5 % du poids de résine.

L'additif est un tensioactif dont la molécule comporte une chaîne à caractère hydrophile et une chaîne à caractère hydrophobe. C'est un produit du type amphiphile.

Au mélange en solution, est alors ajoutée de l'eau en quantité suffisante pour faire précipiter la résine. En effet, du fait de l'apport d'eau, la résine n'est plus dans son domaine de solubilité.

L'additif permet de stabiliser la dispersion de résine dans l'eau et d'éviter, lorsque de l'eau est ajoutée dans le mélange, la décantation et l'agglomération des particules de résine précipitée, ce qui aboutirait à un gel.

Enfin, des pigments sont introduits dans le mélange pour obtenir la composition de coloration selon l'invention. Les pigments se présentent sous forme de poudre, dont la granulométrie est comprise entre 0,5 et 50 µm mise en oeuvre directement ou pré-dispersée sous forme de pâte pigmentaire. Ils sont de nature organique ou minérale.

La quantité de pigments est comprise entre 50 et 150 % du poids de résine.

La composition colorante selon l'invention présente ainsi :
- entre environ 5 à 20 % et de préférence 15 % en poids d'une résine dont le domaine de solubilité est restreint,
- entre environ 5 à 40 % et de préférence 20 % en poids de pigments,
- entre environ 0,1 à 5 % et de préférence 1 % en poids d'un additif à caratères respectivement hydrophile et hydrophobe et
- entre environ 90 à 60 % et de préférence 64 % en poids d'eau.

L'invention concerne également un procédé d'obtention de matériaux bitumineux colorés ou pigmentés.

Ce procédé consiste tout d'abord à appliquer, sur au moins une face du matériau fibreux à traiter, la composition colorante qui vient d'être décrite.

Le matériau fibreux est notamment un feutre cellulosique ou un carton. Il peut se présenter à l'état sec ou comporter de l'eau dans une proportion allant jusqu'à 60 % en poids.

La composition peut être appliquée notamment par pulvérisation avec/sans air comprimé, par enduction en utilisant au moins un rouleau de transfert (en mousse par exemple) ou par dépôt d'un film très mince.

L'épaisseur de la couche obtenue correspond à un grammage de matières sèches compris entre environ 25 et 130 g/m².

Dans cette gamme de valeurs, l'épaisseur de la couche de composition colorante est suffisante pour colorer la plaque et reste assez mince pour permettre la pénétration ultérieure du bitume dans le matériau fibreux.

Le matériau fibreux coloré est ensuite séché, notamment par un simple séchage à l'air. Il subit enfin une opération d'imprégnation de bitume, la couche de composition colorante subissant ainsi une cuisson, à haute température, au sein de la masse de bitume chaud.

Le matériau bitumineux obtenu présente, en surface, une coloration. Les essais effectués ont montré que cette coloration présente une tenue et une résistance meilleures que celles obtenues avec des procédés classiques de coloration.

L'invention sera mieux comprise à la lecture des exemples de mise en oeuvre qui vont maintenant être décrits.

### Exemple 1

On prépare une composition de coloration selon l'invention, à partir d'une résine commercialisée sous la dénomination LAMAL® 141 S par la société LAMAL et qui se présente sous forme de poudre à 100% de matières sèches.

Cette résine est dissoute dans l'eau, à température ambiante et dans des proportions égales (50 % en poids de résine et 50 % en poids d'eau). La solution obtenue est limpide.

On ajoute un additif au mélange, du type TEGOPREN® 5852H, commercialisé par la société GOLDSCHMIT, en une quantité correspondant à environ 2,5 % du poids de résine, puis de l'eau, dans une quantité correspondant à 30 % en poids du mélange. La résine précipite et on obtient alors une solution laiteuse de résine finement dispersée dans l'eau.

Des pigments se présentant sous la forme d'une pâte pigmentaire brune commercialisée par la société HOLIDAY Dispersion sont enfin ajoutés dans la solution, dans une proportion de 20 %.

La composition colorante est appliquée sur une face d'un matériau fibreux comportant de 0 à 70 % d'eau, puis celui-ci est séché à l'air libre.

On constate qu'un frottement de la surface colorée du matériau fibreux (notamment avec le doigt) ne révèle aucune trace de pigment.

### Exemple 2

On prépare une composition colorante selon l'invention, à partir d'une résine commercialisée sous la dénomination LAMELITE® C par la société AGROLINZ MELAMIN ITALIA et qui se présente sous forme de poudre.

Cette résine présente une solubilité dans l'eau comprise entre 30 et 65 %, à une température de 25°C.

Elle est dissoute dans de l'eau dans des proportions suivantes : environ 40 % en poids de résine pour 60 % en poids d'eau.

On ajoute au mélange un additif commercialisé sous la dénomination TEGOPREN® 5852, dans une quantité correspondant à environ 4% du poids de résine.

De l'eau est ensuite ajoutée au mélange, dans une quantité correspondant à au moins 40 % en poids du mélange.

Les pigments sont enfin incorporés dans le mélange dans une proportion de 50 % (pigments/mélange en poids). Ils sont sous forme de pâte avec une proportion de pigments d'environ 60 %. Il s'agit d'une pâte d'oxyde de fer, ocre commercialisée sous la dénomination ASTRA® AGR 301.

La composition colorante est appliquée sur une face d'un matériau fibreux comportant de 0 à 70 % d'eau, puis ce dernier est séché à l'air libre.

Comme pour la composition colorante conforme à l'exemple 1, en frottant avec le doigt la surface colorée du matériau fibreux, aucune trace de pigment n'apparaît.

Les deux exemples de composition colorante selon l'invention vont maintenant être comparés à une composition colorante réalisée à partir d'une résine totalement soluble dans l'eau, en toutes proportions.

Cette composition colorante de comparaison est réalisée à partir d'une résine commercialisée sous la dénomination URECOLL MK® par la société BASF.

Elle se présente sous la forme d'une solution aqueuse comportant une proportion de 70 % en poids de matières sèches.

Cette résine est dissoute dans l'eau pour obtenir une solution comportant environ 20 % de résine.

Des pigments sont incorporés au mélange, dans une proportion d'environ 130 % du poids de résine.

Cette composition colorante est ensuite appliquée sur une face du matériau fibreux également utilisé selon l'invention et celui-ci est séché à l'air libre.

On constate qu'en frottant avec le doigt la surface colorée du matériau, celui-ci se colore de pigment. Par ailleurs, si le matériau est séché par une sécherie à air ventilé, celle-ci entraîne également le départ de grains de pigment de la surface colorée du matériau.

La comparaison entre les exemples 1 et 2 et la composition colorante à base d'URECOLL® montre qu'il est essentiel d'utiliser une résine à solubilité dans l'eau réduite pour améliorer la tenue des pigments sur le matériau fibreux.

On peut avancer les explications suivantes sans que celles-ci soient exhaustives et définitives.

Avec la composition colorante selon l'invention, une proportion importante de résine enrobe les pigments et n'est pas solubilisée dans l'eau. Pour l'exemple 1, on constate par exemple que seulement 20 % en poids de la résine est solubilisée.

Ainsi, une proportion importante de résine reste à la surface du matériau fibreux qui a été revêtue d'une couche de composition colorante et elle permet d'accrocher les pigments sur le matériau.

Au contraire, lorsqu'on applique une composition colorante à base d'URECOLL, quelles que soient les proportions respectives de résine et d'eau, la résine va diffuser dans le matériau fibreux et les pigments ne seront pas fixés au matériau.

Des essais de vieillissement ont également été effectués sur des matériaux fibreux revêtus de la composition colorante conforme à l'exemple 1 et imprégnés de bitume et sur des matériaux fibreux revêtus de la composition colorante de comparaison à base de résine URECOLL® et imprégnés de bitume.

Les essais ont consisté à pulvériser de l'eau à une température de 35°C selon les étapes suivantes :
- 3 semaines de pulvérisation, jour et nuit,
- 2 semaines alternées : exposition au soleil pendant le jour et pulvérisation la nuit,
- 3 semaines d'arrêt : exposition au soleil et
- enfin 4 semaines alternées : exposition au soleil pendant le jour et pulvérisation la nuit.

L'examen des matériaux après ces essais montre que la décoloration des matériaux teintés avec la composition colorante de comparaison est plus forte que celle des matériaux teintés avec la composition de l'exemple 1.

Il est également souhaitable de rigidifier le matériau bitumineux, pour le rendre plus résistant au fléchissement.

Pour cela, il est connu d'incorporer au matériau fibreux, avant imprégnation par du bitume, une résine dans une quantité allant jusqu'à 4 à 5% (voire 10 %) en poids de résine par rapport au poids de matériau sec.

On peut notamment se référer au brevet français n°2 466 489 qui décrit un procédé de ce type.

Lors de l'incorporation de la résine, le matériau fibreux comporte de 0 à 70 % d'eau.

Après l'application de résine, le matériau est séché, puis imprégné par du bitume, selon des procédés classiques.

La résine est incorporée sur la face du matériau fibreux opposée à celle qui est ou sera revêtue d'une composition colorante selon l'invention.

La quantité de résine qui est utilisée dans ce procédé est relativement importante.

Or, il est apparu qu'en choisissant une résine particulière, la quantité de résine pouvait être considérablement réduite, tout en améliorant la résistance au fléchissement du matériau bitumineux.

La résine qui est utilisée dans ce cas est une résine totalement soluble dans l'eau et en toutes proportions.

Avec une telle résine, il suffit d'incorporer dans le matériau fibreux, une quantité de 2% en poids de résine par rapport au poids du matériau sec. La quantité maximale de résine sera de 10 % en poids par rapport au poids du matériau sec.

A titre d'exemple, on peut utiliser la résine URECOLL® précédemment décrite.

Des essais ont montré qu'une quantité de 2% en poids de résine par rapport au poids du matériau sec améliore de 50 % la résistance à la déformation en milieu humide du matériau bitumineux. Ces essais ont été réalisés par un système de mesure dynamométrique à la déformation.

Bien entendu, en incorporant davantage de résine, la résistance sera encore améliorée.

Par contre, si l'on incorpore dans le matériau fibreux une résine non solubilisée, on ne constate aucune amélioration de la résistance à la déformation.

A titre d'exemple, c'est notamment le cas pour la résine LAMAL® 141S, précédemment décrite, diluée à 20 % dans l'eau (c'est-à-dire en dehors de son domaine de solubilité) et pour une même quantité de 2% en poids par rapport au poids de matériau fibreux.

La solubilisation de la résine dans l'eau est donc essentielle pour que la résine diffuse dans l'épaisseur du matériau fibreux. Dans le cas contraire, les particules solides de résine sont filtrées par le matériau et restent à sa surface sans pénétrer.

Ainsi, sur un même matériau fibreux, peuvent être appliquées sur une face, une composition colorante selon l'invention et sur l'autre face, une résine diluée dans l'eau, cette résine étant totalement soluble dans l'eau en toutes proportions et la quantité de résine utilisée pouvant être aussi faible que 2% en poids par rapport au poids du matériau fibreux sec.

Ce matériau fibreux est ensuite séché et imprégné par du bitume.

Le matériau bitumineux obtenu présente une tenue à la coloration et une résistance au fléchissement en milieu humide qui sont considérablement améliorées.

## Revendications

1. Composition à base de résine et de pigments pour l'obtention de matériaux bitumineux teintés comprenant :
- entre environ 5 à 20 % et de préférence 15 % en poids d'une résine dont le domaine de solubilité est restreint,
- entre environ 5 à 40 % et de préférence 20 % en poids de pigments,
- entre environ 0,1 à 5 % et de préférence 1 % en poids d'un additif à caratères respectivement hydrophile et hydrophobe et
- entre environ 90 à 60 % et de préférence 64 % en poids d'eau.

2. Procédé de préparation d'une composition colorante pour l'obtention de matériaux bitumineux teintés comprenant les étapes successives suivantes :
- solubiliser dans l'eau et à l'intérieur de son domaine restreint de solubilité, une résine dans des proportions en poids respectives d'environ entre 30 et 70 % de résine et 30 à 70 % d'eau,
- ajouter au mélange obtenu, un additif à caratères respectivement hydrophile et hydrophobe et dans une quantité comprise entre 0,5 et 3% du poids de résine,
- ajouter de l'eau en quantité suffisante pour faire précipiter la résine,
- ajouter des pigments sous forme de poudre et en quantité comprise entre 50 et 150 % en poids de résine.

3. Procédé selon la revendication 2, le additif étant un tensioactif dont la molécule comporte une chaîne à caractère hydrophile et une chaîne à caractère hydrophobe.

4. Procédé selon l'une des revendications 2 ou 3, la granulométrie des pigments étant comprise entre 0,5 et 50 µm.

5. Procédé d'obtention de matériaux bitumineux teintés consistant à :
- appliquer sur au moins une face du matériau à traiter une composition colorante selon la revendication 1 ou obtenue selon le procédé conforme à l'une des revendications 2 à 4,
- sécher le matériau revêtu de la composition colorante,
- puis l'imprégner de bitume.

6. Procédé selon la revendication 5, le matériau étant un feutre cellulosique ou un carton.

7. Procédé selon l'une des revendications 5 ou 6, le poids en matières sèches du revêtement de composition colorante étant compris entre environ 25 et 130 g/m².

8. Procédé selon l'une des revendications 5 à 7, consistant à appliquer sur la face du matériau fibreux non revêtu de la composition colorante, une solution aqueuse de résine.

9. Procédé selon la revendication 8, ladite résine étant totalement soluble dans l'eau et en toutes proportions.

10. Procédé selon l'une des revendications 8 ou 9, la quantité de résine par rapport au poids du matériau sec est comprise entre 2 et 10 % en poids.
